# EUROPÄISCHE PATENTANMELDUNG

(11) **EP 1 568 749 A1**
(43) Veröffentlichungstag der Anmeldung: **31.08.2005**
(21) Anmeldenummer: 04004189.9
(22) Anmeldetag: 25.02.2004
(51) Int. Cl.: C09J 175/04, C09J 163/00, C08G 59/00, C08G 18/10, B32B 17/00

(54) **Zweikomponentiger Klebstoff zur Herstellung von Halbzeugen und Sandwich-Verbundwerkstoffen**

(71) Anmelder: Sika Technology AG, 6340 Baar (CH)
(72) Erfinder: Merz, Peter W., 8832 Wollerau (CH); Finter, Jürgen, 8037 Zürich (CH)
(74) Vertreter: Isler, Jörg

(57) **Zusammenfassung**

Die vorliegende Erfindung betrifft zweikomponentige Klebstoffe **K**, welche aus zwei Komponenten **K1** und **K2** bestehen. Die Komponente **K1** umfasst mindestens ein Epoxidharz **A** mit durchschnittlich mehr als einer Epoxidgruppe pro Molekül; mindestens ein Epoxid-Addukt **B** mit durchschnittlich mehr als einer Epoxidgruppe pro Molekül und ist ein Epoxid-Addukt des Typs **B1** und gegebenenfalls kombiniert mit einem Epoxid-Addukt des Typs **B2**; mindestens ein Reaktionsprodukt **F** eines Epoxid-Adduktes **B** mit einer Verbindung **C,** welche mindestens zwei Isocyanatgruppen aufweist sowie mindestens einen Härter **D** für Epoxidharze, welcher durch erhöhte Temperatur aktiviert wird. Die Komponente **K2** umfasst eine Verbindung **E**, welche mindestens zwei Isocyanatgruppen umfasst.

## Beschreibung

### Technisches Gebiet

Die vorliegende Erfindung betrifft das Gebiet der von Klebstoffen zur Herstellung von Halbzeugen und Sandwich-Verbundwerkstoffen.

### Stand der Technik

DE 199 19 783 A1 beschriebt ein Herstellverfahren für ein durch Tiefziehen umgeformtes, wenigstens zweilagiges Blechverbundteil. Der hierfür verwendete Klebstoff ist insbesondere ein Epoxid-Hotmelt-Klebstoff und wird durch gezielte Temperaturzufuhr teilvernetzt, nach dessen Abkühlung umgeformt um schliesslich durch erneute Temperaturzufuhr endvernetzt zu werden. Dieses Verfahren weist jedoch den grossen Nachteil auf, dass der Umfang der Teilvernetzung sehr schwierig zu kontrollieren ist. Weiterhin ist damit zu rechnen, dass ein derart teilvernetztes Teil über längere Lagerzeiten hin weiter vernetzt, so dass ein Umformen nach einer langen Lagerzeit nicht mehr oder nur mehr sehr schlecht möglich ist.

WO 00/21747 beschreibt ein Verfahren zum Herstellen eines einbrennlackierten Formbauteils. Hierfür wird ein Hotmelt-Epoxid-Klebstoff verwendet, welcher nach dem Tiefziehen durch Temperaturzuführung vernetzt wird. Das beschriebene Verfahren führt jedoch zu schlechter Haftung, weshalb die Verwendung eines Primers nötig ist. Weiterhin ist der abgekühlte Hotmelt-Klebstoff nicht plastisch verformbar und führt deshalb beim Umformen, insbesondere beim Tiefziehen, zu Rissen im Formteil.

EP 0 343 676 A2 beschreibt einen reaktiven Schmelzklebstoff auf Basis eines Polyurethan-Epoxidadduktes für den Einsatz als Bördelfalzklebstoff im Fahrzeugbau. Das Falzen erfolgt allerdings gemäss diesem Verfahren unmittelbar anschliessend an das Zusammenkleben der Stahlbleche. Der offenbarte Klebstoff ist jedoch nicht verwendbar für die Herstellung eines lagerfähigen Halbzeugs, da die erzielte Festigkeit (10 psi) zu gering ist, um zu verhindern, dass durch die Druckkräfte beim Lagern oder anderen Umformmethoden bedingt, der Klebstoff zwischen den Blechen herausgequetscht wird.

### Darstellung der Erfindung

Aufgabe der vorliegenden Erfindung ist es daher, einen Klebstoff zur Verfügung zu stellen, der einerseits bereits bei Raumtemperatur eine genügend grosse Festigkeit aufbauen kann, um gewährleisten zu können, dass das aus dem Klebstoff und zwei flächigen Substraten gebildete Halbzeug lagerfähig ist und umgeformt werden kann, ohne dass der Klebstoff zwischen den Substraten herausgequetscht wird und dass andererseits ein solcher Klebstoff, beziehungsweise Halbzeug, hiernach zu einem späteren Zeitpunkt nochmals einem durch Temperatur verursachten Härteschritt unterworfen werden kann, die zu einer hohen Endfestigkeit führt, wie sie typischerweise von der Automobilindustrie für Karosserieteile gefordert wird.

Überraschenderweise wurde gefunden, dass dies durch einen zweikomponentigen Klebstoff gemäss Anspruch 1 erreicht werden kann.

Insbesondere zeigte sich, dass sich der erfindungsgemässe Klebstoff durch ein breites Haftspektrum auszeichnet und insbesondere auf beölten Metallblechen ohne Vorbehandlung eine exzellente Haftung aufweist.

Weiterhin konnte gezeigt werden, dass mit einem erfindungsgemässen Klebstoff äusserst widerstandsfähige und leichte Halbzeuge und Sandwich-Verbundwerkstoffe erzeugt werden können. Weiterhin konnte gezeigt werden, dass die mit einem Verfahren gemäss Anspruch 20 erzeugten Sandwich-Verbundwerkstoffe hohe Schlagfestigkeit und Temperaturbeständigkeit aufweisen.

Weitere vorteilhafte Ausgestaltungen der Erfindung ergeben sich aus den Unteransprüchen.

### Wege zur Ausführung der Erfindung

Die vorliegende Erfindung betrifft zweikomponentige Klebstoffe **K**, welche aus zwei Komponenten **K1** und **K2** bestehen. Die Komponente **K1** umfasst mindestens ein Epoxidharz **A** mit durchschnittlich mehr als einer Epoxidgruppe pro Molekül; mindestens ein Epoxid-Addukt **B** mit durchschnittlich mehr als einer Epoxidgruppe pro Molekül und ist ein Epoxid-Addukt des Typs **B1** und gegebenenfalls kombiniert mit einem Epoxid-Addukt des Typs **B2**; mindestens ein Reaktionsprodukt **F** eines Epoxid-Adduktes **B** mit einer Verbindung **C,** welche mindestens zwei Isocyanatgruppen aufweist sowie mindestens einen Härter **D** für Epoxidharze, welcher durch erhöhte Temperatur aktiviert wird. Die Komponente **K2** umfasst eine Verbindung **E,** welche mindestens zwei Isocyanatgruppen umfasst.

Die Komponente **K1** umfasst mindestens ein Epoxidharz **A.** Das Epoxidharz **A** weist durchschnittlich mehr als eine Epoxidgruppe pro Molekül auf. Bevorzugt sind 2, 3 oder 4 Epoxidgruppen pro Molekül.. Vorzugsweise handelt es sich beim Epoxidharz **A** um ein Flüssigharz, insbesondere Diglycidylether von Bisphenol-A (DGEBA), vom Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Durch die Herstellungsverfahren dieser Harze bedingt, ist klar, dass in den Flüssigharzen auch höher molekulare Bestandteile enthalten sind. Solche Flüssigharze sind beispielsweise als Araldite® GY 250, Araldite® PY 304, Araldite® GY 282 (Vantico) oder D.E.R. ® 331 (Dow) erhältlich.

Die Komponente **K1** umfasst weiterhin mindestens ein Epoxid-Addukt **B.** Das Epoxid-Addukt **B** ist ein Epoxid-Addukt des Typs **B1** und gegebenenfalls kombiniert mit einem Epoxid-Addukt des Typs **B2.**

Das Epoxid-Addukt **B1** ist erhältlich durch die Reaktion mindestens einer Dicarbonsäure, bevorzugt mindestens einer dimeren Fettsäure, insbesondere mindestens einer dimeren C4 - C20 Fettsäure (entsprechend einer C8 - C40 Dicarbonsäure) mit mindestens einem Diglycidylether, insbesondere Bisphenol-A-Diglycidylether, Bisphenol-F-Diglycidylether oder Bisphenol-A/F-Diglycidylether. Das Epoxid-Addukt **B1** weist einen flexibilisierenden Charakter auf.

Das Epoxid-Addukt **B2** ist erhältlich durch die Reaktion von mindestens einem Bis(aminophenyl)sulfon-Isomeren oder mindestens eines aromatischen Alkohols mit mindestens einem Diglycidylether. Der aromatische Alkohol ist bevorzugt ausgewählt aus der Gruppe von 2,2-Bis(4-hydroxyphenyl)propan (=Bisphenol-A), Bis(4-hydroxyphenyl)methan (=Bisphenol-F), Bis(4-hydroxyphenyl)sulfon, Hydrochinon, Resorcin, Brenzkatechin, Naphthohydrochinon, Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan sowie alle Isomeren der vorgenannten Verbindungen. Die bevorzugten Bis(aminophenyl)sulfon-Isomeren sind Bis(4-aminophenyl)sulfon und Bis(3-aminophenyl)sulfon. Beim Diglycidylether handelt es sich insbesondere um Bisphenol-A-Diglycidylether, Bisphenol-F-Diglycidylether oder Bisphenol-A/F-Diglycidylether. Als besonders bevorzugter aromatischen Alkohol ist Bis(4-hydroxyphenyl)sulfon geeignet. Als besonders bevorzugt ist das Epoxid-Addukt **B2** erhältlich durch die Reaktion von Bis(aminophenyl)sulfon-Isomeren mit mindestens einem Diglycidylether. Das Epoxid-Addukt **B2** weist eine eher starre Struktur auf.

In einer besonders bevorzugten Ausführungsform liegt als Epoxid-Addukt **B** als eine Kombination von Epoxid-Addukt **B1** und Epoxid-Addukt **B2** vor.

Es hat sich gezeigt, dass diese besonderes bevorzugte Kombination von **B1** und **B2** eine gegenüber der entsprechenden Zusammensetzung, die lediglich das Epoxid-Addukt **B1** enthält, erhöhte Glasübergangstemperatur, aufweist.

Das Epoxid-Addukt **B** weist bevorzugt ein Molekulargewicht von 700 - 6000 g/mol, vorzugsweise 900 - 4000 g/mol, insbesondere 1000 - 3300 g/mol auf. Unter 'Molekulargewicht' oder 'Molgewicht' wird hier und im Folgenden das Molekulargewichtsmittel M_{w} verstanden.

Die Herstellung des Epoxid-Adduktes B erfolgt in der dem Fachmann bekannter Weise.

Vorteilhaft beträgt der Gesamtanteil von Epoxidharz **A** 12 - 50 Gewichts-%, vorzugsweise 17 - 45 Gewichts-%, bezogen auf die Gewichtsumme von **A+B.**

Unter ,Gesamtanteil' wird hier und im Folgenden jeweils die Summe aller zu dieser Kategorie gehörenden Bestandteile verstanden. Enthält beispielsweise ein Klebstoff 2 Epoxidharze **A,** so ist der Gesamtanteil die Summe dieser zwei Epoxidharze.

Weiterhin vorteilhaft beträgt der Gesamtanteil des Epoxidharz **A** und Epoxid-Addukt **B** in der Summe 10 - 60 Gewichts-%, vorzugsweise 15 - 55 Gewichts-%, bezogen auf das Gewicht des gesamten Klebstoffs **K.**

Für die Synthese des Epoxid-Adduktes kann ein dem Fachmann bekannter Katalysator verwendet werden, wie beispielsweise Triphenylphosphin.

Die Komponente **K1** umfasst weiterhin mindestens ein mindestens ein Reaktionsprodukt **F eines** Epoxid-Adduktes **B** mit einer Verbindung **C** mit mindestens zwei Isocyanatgruppen. Die Verbindung **C** ist insbesondere ein Polyisocyanat **C1** oder ein Isocyanatgruppen aufweisendes Polyurethanprepolymer **C2.** Dieses Reaktionsprodukt wird durch die Verwendung eines Überschusses an Hydroxylgruppen des Epoxid-Adduktes **B** in Bezug auf die an Isocyanat-Gruppen der Verbindung **C** hergestellt, das heisst, dass das Reaktionsprodukt **F** keine messbaren freie Isocyanatgruppen mehr aufweist. Insbesondere handelt es sich bei diesem Reaktionsprodukt **F** hierbei um ein Produkt, welches die Struktur 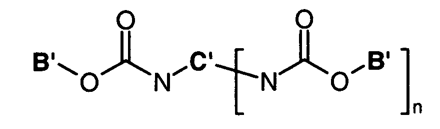 aufweist. **B'** ist identisch mit der Struktur von **B**, ausser dass eine Hydroxylgruppen fehlt und **C'** ist identisch mit der Struktur von **C**, ausser dass alle Isocyanatgruppen fehlen und n+1 stellt die Anzahl der Isocyanatgruppen von **C** dar. Dieses Produkt mindestens zwei freie Hydroxylgruppen auf .

Unter einem 'Polyisocyanat' wird in der vorliegenden Anmeldung eine niedermolekulare Verbindung mit mehr als zwei freien Isocyanatgruppen verstanden und umfasst sowohl Monomere als auch deren Oligomeren, wie beispielsweise auch Biurete und Isocyanurate. Als Beispiele für das Polyisocyanat **C1** seien die folgenden, in der Polyurethanchemie bestens bekannten Polyisocyanate erwähnt:

2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethytxytytendiisocyanat (TMXDI), 1,3-und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind MDI, TDI, HDI und IPDI.

Das Isocyanatgruppen aufweisende Polyurethanprepolymer **C2** wird hergestellt aus mindestens einem Polyisocyanat **C1** und aus mindestens einem Polyol.

Als Polyole für die Herstellung des Polyurethanprepolymers können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxypropylendiole und -triole mit einem Molekulargewicht von 400 bis 8'000 g/mol.
   Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter 'Molekulargewicht' oder 'Molgewicht' versteht man im vorliegenden Dokument stets das Molekulargewichtsmittel Mₙ.
- Hydroxyfunktionelle Polybutadiene.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten ― zum Aufbau der Polyesterpolyole eingesetzten ― Alkohole mit Dialkylcarbonaten, Diarylcarbonaten oder Phosgen zugänglich sind.

Diese genannten Polyole weisen ein mittleres Molekulargewicht von 250 bis 30'000 g/mol und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanprepolymers mitverwendet werden.

Die Herstellung des Isocyanatgruppen aufweisende Polyurethanprepolymer **C2** kann dadurch erfolgt, dass das Polyol und das Polyisocyanat **C1** mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer, verbleibt. Gegebenenfalls kann das Polyurethanprepolymer unter Mitverwendung von Lösemitteln oder Weichmachern hergestellt werden, wobei die verwendeten Lösemittel oder Weichmacher keine gegenüber Isocyanaten reaktive Gruppen enthalten.

Das Molekulargewicht des aufweisende Polyurethanprepolymer **C2** beträgt insbesondere 400 bis 10000 g/mol, bevorzugt 1000 bis 5000 g/mol.

Die Komponente **K1** umfasst weiterhin mindestens einen Härter **D** für Epoxidharze, welcher durch erhöhte Temperatur aktiviert wird. Es handelt sich hierbei vorzugsweise um einen Härter, welcher ausgewählt ist aus der Gruppe Dicyandiamid, Guanamine, Guanidine, Aminoguanidine und deren Derivate. Weiterhin sind katalytisch wirksame substituierte Harnstoffe wie Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Vorteilhaft beträgt der Gesamtanteil des Härters **D** 1 - 6 Gewichts-%, vorzugsweise 2 - 4 Gewichts-%, bezogen auf das Gewicht des gesamten Klebstoffs **K.**

Die Komponente **K1** weist keine messbaren Mengen an freien Isocyanatgruppen auf.

Die Komponente **K1** ist bei Raumtemperatur pastös bis fest. typischerweise lässt sich die Komponente **K1** erst bei Temperaturen über 60°C derart verflüssigen, dass mit üblichen Applikationsgeräten verarbeitbar, insbesondere mischbar, ist.

Die Komponente **K2** umfasst mindestens eine Verbindung **E** mit mindestens zwei Isocyanat-Gruppen. Hierbei kann es sich um niedermolekuklare polymere Verbindungen handelt.

Bei den Isocyanat-Gruppen enthaltenden Verbindungen **E** handelt es sich entweder um ein Polyisocyanat **C1** oder ein Isocyanatgruppen aufweisendes Polyurethanprepolymer **C2.,** wie sie für die Verwendung in der Komponente **K1** bereits beschrieben wurden, wobei das für die Komponente **K1** und **K2** aus der oben angegebenen Auswahl ausgewählte Polyisocyanat **C1** oder Polyurethanprepolymer **C2** nicht zwingendermassen gleich sein müssen.

In einer bevorzugten Ausführungsform enthält der Klebstoff zusätzlich mindestens einen epoxidgruppentragenden Reaktiwerdünner. Bei diesen Reaktivverdünnern handelt es sich insbesondere um:
- Glycidylether von monofunktionellen gesättigten oder ungesättigten, verzweigten oder unverzweigten, zyklischen oder offenkettigen C4 - C30 Alkoholen, z.B. Butanolglycidylether, Hexanolglycidylether, 2-Ethylhexanolglycidylether, Allylglycidylether, Tetrahydrofurfuryl- und Furfurylglycidylether etc.
- Glycidylether von difunktionellen gesättigten oder ungesättigten, verzweigten oder unverzweigten, zyklischen oder offenkettigen C2 - C30 Alkoholen, z.B Aethylenglykol-, Butandiol-, Hexandiol-, Oktandioldigylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol etc.
- Glycidylether von Phenol- und Anilinverbindungen wie Phenylglycidylether, Kresolglycidylether, p-tert.-Butylphenylglycidylether, Nonylphenolglycidylether, Glycidylether aus Cashewnuss-Schalen-Öl, Glycidylether von Cardanol, beispielsweise erhältlich als Cardolite® NC-513 von Cardolite, N,N-Diglycidylanilin etc.
- Epoxidierte Tertiäre Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycoldiglycidylether etc.

Besonders bevorzugt sind Hexandioldiglycidylether, Polypropylenglycoldiglycidylether und Polyethylenglycoldiglycidylether sowie Glycidylether von Cardanol.

Vorteilhaft beträgt der Gesamtanteil des epoxidgruppentragenden Reaktiwerdünner 1 - 7 Gewichts-%, vorzugsweise 2 - 6 Gewichts-%, bezogen auf das Gewicht des gesamten Klebstoffs **K.**

Weiterhin können die Komponenten **K1** und **K2** unabhängig voneinander noch mindestens einen der folgenden Bestandteile umfassen, wobei für den konkreten Einsatz in der jeweiligen Komponente darauf geachtet werden soll, dass dieser zusätzliche Bestandteil bei Raumtemperatur oder leicht erhöhter Temperatur nicht reaktiv mit bereits in dieser Komponenten vorhandenen Verbindungen ist, weil dies zu allenfalls zu Vernetzungen oder zu mangelnder Lagerstabilität führen würde:
- Füllstoff;
- thermoplastisches Polymer, wie zum Beispiel Polystyrol, Polyester, Polyphenylenoxid, Phenoxyharze;
- Schagzähigkeitsmodifikator;
- Organisches Thixotropiermittel, insbesondere auf Basis von Rizinusölderivaten, Harnstoffderivaten oder Acrylatderivate;
- Katalysator für die Katalyse der Reaktion zwischen Isocyanatgruppen und Hydroxylgruppen, wie zum Beispiel Zinnorganische oder Bismutorganische Verbindungen, insbesondere Dibutylzinndilaurat;
- Katalysator für die Thermoaktivierung des Härters **D,** insbesondere die Katalysatoren, die unter dem Handelsnamen Dyhard ® UR 300 und Dyhard ® UR 500 kommerziell von SKW Troisdorf erhältlich sind;
- Haftvermittler, insbesondere Alkoxysilane, bevorzugt Alkoxysilan mit funktionelle Gruppen ausgewählt aus der Gruppe umfassend Epoxy-, Isocyanat-, Amin- und C-C-Doppelbindung;
- Flammschutzmittel;
- Stabilisator gegen Wärme oder UV-Strahlung.

Bevorzugt als ein solcher möglicher zusätzlicher Bestandteil ist ein Schlagzähigkeitsmodifikator.Dieser kann funktionelle Gruppen aufweisen oder nicht. Beispielsweise kann dies ein Schlagzähigkeitsmodifikator sein, wie er auf Basis von Polybutadienacrylnitril-Copolymeren handelsüblich unter dem Namen Hycar® erhältlich sind und deren Derivate, insbesondere deren Reaktionsprodukte mit Diglycidylethern.

Weiterhin kann der Schlagzähigkeitsmodifikator ein Kern/Schalen-Polymer sein. Bevorzugt besteht der Kern des Kern/Schalenpolymers aus einem Polymer mit einer Glasübergangstemperatur von -30°C oder tiefer und die Schale des Kern/Schalenpolymers aus einem Polymer mit einer Glasübergangstemperatur von 70°C oder höher. Beispiele für Polymere, die als Kernmaterial eingesetzt werden können, sind Polybutadien, Polyacrylsäure- und Polymethacrylsäureester sowie deren Co- oder Terpolymere mit Polystyrol, Polyacrylnitril oder Polysulfid. Vorzugsweise enthält das Kernmaterial Polybutadien oder Polybutylacrylat. Beispiele für Schalenpolymere sind Polystyrol, Polyacrylnitril, Polyacrylat- und -methacrylatmono-, -co- oder -terpolymere oder Styrol/Acrylnitril/Glycidylmethacrylat-Terpolymere. Vorzugsweise wird Polymethylmethacrylat als Polymer für die Schalen eingesetzt. Die Grösse solcher Kern/Schalenpolymere beträgt zweckmässig 0.05 - 30 µm, vorzugsweise 0.05 - 15 µm. Insbesondere gelangen Kern/Schalenpolymere mit einer Grösse von kleiner als 3 µm zur Anwendung. Bevorzugt werden Kern/Schalenpolymere eingesetzt, die einen Kern aus Polybutadien oder Polybutadien/Polystyrol enthalten. Dieses Kernmaterial ist vorzugsweise teilvernetzt. Weitere Kernmaterialien sind Polyacrylate und -methacrylate, insbesondere Polyacrylsäure- und Polymethacrylsäureester sowie deren Co- oder Terpolymere.

Die Schale besteht vorzugsweise aus Polymeren auf der Basis von Methylmethacrylat, Methacrylsäurecyclohexylester, Acrylsäurebutylester, Styrol, Methacrylnitril.

Kommerziell erhältliche Produkte von Kern/Schalenpolymeren sind beispielsweise F-351 (Zeon Chemicals), Paraloid® und Acryloid® (Röhm und Haas), Blendex ®(GE Speciality Chemicals) und ähnliche.

Vorteilhaft beträgt der Gesamtanteil des Kern/Schalen-Polymers 3 - 20 Gewichts-%, vorzugsweise 5 - 12 Gewichts-%, bezogen auf das Gewicht des gesamten Klebstoffs K.

Bevorzugt als ein möglicher zusätzlicher Bestandteil ist ein Füllstoff. Als Füllstoff werden einerseits Leichtfüllstoffe wie Hohlkugeln aus Glas, Keramik, Metall, oder organischen Polymeren bevorzugt, insbesondere sogenannte Extendospheres und Microspheres. Anderseits sind anorganische Füllstoffe als Füllstoffe bevorzugt, insbesondere Russe, Kreide, Metallpulver, Talkum, Kieselsäurederivate. Als besonders bevorzugt gelten beschichtete Kreiden und Russ.

Besonders geeignet als Füllstoffe gelten organische Füllstoff wie Polymere, insbesondere Polystyrole, Polyamide und Phenoxyharze.

Vorteilhaft beträgt der Gesamtanteil des gesamten Füllstoffs 5 - 30 Gewichts-%, vorzugsweise 10 - 28 Gewichts-%, bezogen auf das Gewicht des gesamten Klebstoffs **K.**

Die Komponente **K1** und **K2** werden nach üblichen Verfahren hergestellt und in handelübliche Behälter abgefüllt. Jeder Schritt, bei welchem Isocyanate zu Einsatz kommen erfolgt typischerweise unter Aussschluss von Luftfeuchtigkeit und vorzugsweise unter Inertgasatmosphäre. Desahlb istg es auch vorteilhaft, dass alle Edukte und Zusatzstoffe, die hierbei zum Einsatz kommen möglichst trocken sind. Ebenso ist es vorteilhaft, wenn die Komponenten **K1** und **K2,** insbesondere die Komponente **K2,** in möglichst feuchtigkeitsdichten Behältern aufbewahrt werden. Dies ist in diesem Fall ganz besonders wichtig für die Komponente **K2.**

Die Komponenten **K1** und **K2** werden gemischt. Das Mischungsverhältnis hängt unter anderem von der Verwendung von Füllstoffen ab. Sind beide Komponenten ungefüllt oder beide gefüllt, hat sich gezeigt , dass ein Mischverhältnis der Komponenten im Gewichtsverhältnis von **K1/K2** = 250/1 bis 50/1, insbesondere 200/1 bis 100/1, zu besonders guten Eigenschaften führt. Ist lediglich die Komponente **K1** mit Füllstoffen versehen, hast sich ein Mischverhältnis der Komponenten im Gewichtsverhältnis von **K1/K2** = 100/1 bis 5/1, insbesondere 50/1 bis 10/1, als besonders vorteilhaft herausgestellt.

Insbesondere ist es wesentlich, dass die Komponenten **K1** und **K2** in einem solchen Verhältnis gemischt werden, dass das OH/NCO-Verhältnis ≥ 2, insbesondere 2 - 50, beträgt.

Der zweikomponentigen Klebstoff **K** wird bevorzugt zur Herstellung eines Halbzeugs **H** eingesetzt. Hierfür wird zumindest die Komponente **K1** auf eine Temperatur zwischen 130° und 60°C, insbesondere zwischen 130°C und 80°C, bevorzugt zwischen 100°C und 90°C erhitzt. Anschliessend werden die Komponenten **K1** und **K2** miteinander gemischt. Die Mischung erfolgt üblichen Mitteln, wie Statikmischer, dynamischere Mischer, Einspritzen oder durch Zudosierung mittels Dosierzusatz. Unter Umständen, beispielsweise zur Verbesserung der Vermischungsqualität, kann es vorteilhaft sein, vor dem Mischvorgang auch die Komponente **K2** auf eine Temperatur zwischen 130° und 60°C, insbesondere zwischen 130°C und 80°C, bevorzugt zwischen 100°C und 90°C zu erhitzen. Der gemischte Klebstoff **K** wird nach oder während dem Mischen auf ein flächiges Substrat **S1** appliziert. Das Substrat wird hierbei hervorragend durch den gemischten heissen Klebstoff **K** benetzt. Anschliessend wird typischerweise der Klebstoff **K** mit einem flächigen Substrat **S2** kontaktiert. Diese Kontaktierung erfolgt üblicherweise unter Druckaufschlagung, insbesondere durch eine Presse, während oder nach der Kontaktierung mit dem Substrat **S2** auf mindestens eines der Substrate **S1** oder **S2.** Es ist natürlich auch möglich, dass der gemischte Klebstoff **K** separat je auf das Substrat **S1** und **S1** appliziert werden und anschliessend gefügt werden, so dass hierbei Klebstoff **K** auf Klebstoff **K** trifft. In beiden Fällen ist der Klebstoff **K** zwischen den Substraten **S1** und **S2** angeordnet. Die Dicke der Klebstoffschicht **K** liegt bevorzugt in einem Bereich um 0.5 mm.

Die Substrate können sehr unterschiedliche Materialien darstellen, wie beispielsweise diverse Kunststoffe, Gläser, Keramiken oder Metalle oder Legierungen. Zumindest einer der Substrate ist bevorzugt ein Blech, insbesondere ein Stahl- oder Aluminium-Blech. Bevorzugt handelt es sich hierbei um ein beöltes Stahl- oder beöltes Aluminium-Blech. Als besonderes geeignetes Substrat hat sich beöltes Stahlblech erwiesen. Es hat sich gezeigt, dass auch beölte Metalle verlässlich verklebt werden können. Dieser Effekt wird dadurch erklärt, dass das Öl, welches auf der Oberfläche liegt und das Metall vor Korrosion schützt oder dessen Bearbeitung vereinfacht, von der Klebstoffmatrix schnell absorbiert wird und dadurch von der Oberfläche entfernt wird, so dass sich eine exzellente Haftung aufbauen kann.

Bevorzugt ist eines der Substrate **S1** oder **S2** ein Kunststoff, insbesondere ausgewählt aus der Gruppe umfassend PVC, ABS, CFK, Polyamid und PMMA. Das andere Substrat ist in diesem Fall insbesondere ein Blech, insbesondere Stahlblech.

In einer bevorzugten Ausführungsform sind beide Substrate **S1** und **S2** Bleche, insbesondere beide aus demselben Metall. In der meist bevorzugten Ausführungsform stellen die Substrate **S1** und **S2** beöltes Stahlblech dar.

Die flächigen Substrate sind vorzugsweise dünn. Im Falle des Substrates Blech sind Dicken zwischen 0.5 mm und 0.1 mm, insbesondere zwischen 0.4 mm und 0.2 mm, bevorzugt. Eine grössere Dicke verursacht eine vielfach unerwünschte Dicke während kleinere Dicken zu Festigkeitsproblemen führen kann. Typischerweise kommen diese dünnen flächigen Substrate ab Rolle zur Anwendung.

Nach der Applikation des Klebstoffs **K**, beziehungsweise nach dem Kontaktieren, wird der Klebstoff **K** abgekühlt. Dies kann durch einfaches Erkalten lassen des Verbundes oder durch aktives Kühlen erfolgen. Durch die Abkühlung erfolgt eine Erhöhung der Viskosität, die bis zur Verfestigung des Klebstoffs **K** führt. Dadurch weist der Verbund bereits eine gewisse Grundfestigkeit auf, die ein Verschieben und Bearbeiten des Verbundes zu lassen. Durch die Reaktion der miteinander reaktiven Verbindung in den Komponenten **K1** und **K2** erfolgt rasch eine zusätzliche Erhöhung der Festigkeit des Klebverbundes. Dieser Festigkeit erfolgt erreicht typischerweise nach Stunden bis Tagen einen konstanten Wert. Allerdings ist durch die durch Reaktion erfolgte Verfestigung bereits genügend, dass dieser Verbund verarbeitet werden kann. Insbesondere kann eine solche Bearbeitung ein Schneiden, Ablängen oder Aufwickeln beinhalten. Dieses sogenannte Halbzeug **H** ist über längere Zeit, insbesondere mindestens 3 Monaten, bevorzugt mindestens 6 Monate, lagerfähig. Die Lagerung erfolgt typischerweise als Coil oder in Form eines Stapels von abgelängtem Halbzeug **H**. Für die Verwendung als Halbzeug in der beschriebenen Art, muss der Klebstoff mindestens eine Festigkeit von 0.5 MPa aufweisen.

In einer Ausführungsform der Erfindung wird zur Verstärkung entweder dem Klebstoff **K** geschnittene Glas-, Metall-, Kohlen oder Thermoplastfasern beigemischt oder bei der Halbzeugherstellung zusätzlich zum Klebstoff **K** ein Gewebe, Gewirke oder Gelege dieser Fasern zwischen die Substrate **S1** und **S2** eingebracht.

Das Halbzeug **H** wird für die Herstellung eines Sandwich-Verbundwerkstoffes **S** verwendet. Solche Halbzeuge **H,** beziehungsweise Sandwich-Verbundwerkstoffe **S**, können beispielsweise in der Fahrzeugindustrie verwendet werden. Das Halbzeug **H** wird hierbei einem Umformprozess unterworfen. Der Umformprozess ist beispielsweise Druckumformen, wie Stauchen und Fliesspressen; Zugdruckumformen, wie Tiefenziehen und Drahtziehen; und Zugumformen, wie Streckziehen und Streckrichten. Der Umformprozess lässt sich bei Raumtemperatur durchführen. Es ist wichtig, dass der Klebstoff **K** in dieser Phase weder zu wenig oder zu stark vernetzt ist. Der Klebstoff **K** darf nicht zu wenig vernetzt sein, um nicht währende der Lagerung des Halbzeugs oder während des Umformprozesses zwischen den Substraten **S1** und **S2** rausgequetscht werden. Der Klebstoff **K** darf nicht zu stark vernetzt sein, um ein gutes Verformen zu verhindern. Beim Umformen des Halbzeugs **H** zu einem Umformteil **U** entstehen keine Risse der Bleche und kein Haftversagen oder kein Materialaustritt an den Rändern. Wie bereits erwähnt, liegt die Dicke der Klebstoffschicht **K** zwischen den Substraten **S1** und **S2** bevorzugt in einem Bereich um 0.5 mm. Dies ist insbesondere der Fall, wenn es sich bei den Substraten **S1** und **S2** um Stahlblech handelt. Die beim Tiefziehen entstehenden Rundungen, beispielsweise bei der Herstellung eines Näpfchens, optisch gut geformt, und die Oberfläche bei den Rundungen ist glatt. Ist die Klebstoffschichtdicke **K** wesentlich grösser als 0.5 mm, neigt das Halbzeug **H** beim Tiefziehen eher zu welligen, faltigen oder runzeligen Rundungen. Solche Strukturen sind jedoch störend und deshalb vor allem in den Fällen, in denen diese umgeformten Bereiche sichtbar sind, unerwünscht.

Nach dem Umformprozess des Halbzeugs **H** zu einem Umformteil **U** wird das Umformteil **U** auf eine Temperatur zwischen 130°C und 230°C, insbesondere zwischen 170°C und 190°C, aufgeheizt und bei dieser Temperatur typischerweise während 10 bis 40 Minuten belassen. Zwischen dem Umformprozess und dem Aufheizen werden diese Teile vorzugsweise in ein KTL-Lackbad (KTL = kathodische Elektotauchlackierung) eingetaucht. Bei der Aufheizung in einem Umluftofen wird gleichzeitig der KTL-Lack gebrannt und der Klebstoff **K** weiter vernetzt.

Unter diesen Temperaturbedingungen wird nämlich der Härter **D** für Epoxidharze aktiviert und verursacht eine weitere Vernetzung, die zu einer weiteren Steigerung der Festigkeit führt. Nach der Abkühlung auf Raumtemperatur liegt der fertige Sandwich-Verbundwerkstoff **S** vor. Dieser weist eine exzellenter Endfestigkeit und ein kleines Gewicht auf.

Der Sandwich-Verbundwerkstoff **S** weist ein bedeutend höherer Steifigkeit, welche beispielsweise mittels 3-Punkt Biegefestigkeit ermittelt wird, auf als ein massives Blech der gleichen Dicke und weist ausgezeichnete Akustikeigenschaften auf, die sich beispielsweise in einer sehr guten Dämpfung von Vibrationen zeigt.

### Kurze Beschreibung der Zeichnungen

Im Folgenden werden anhand von Zeichnungen die Herstellung eines Halbzeugs **H,** beziehungsweise eines Sandwich-Verbundwerkstoffs **S** schematisch weiter veranschaulicht. Gleiche Elemente sind in den verschiedenen Figuren mit den gleichen Bezugszeichen versehen. Bewegungen und Kräfte sind mit Pfeilen angegeben.
- Figur 1: zeigt eine schematische Darstellung der Festigkeits- beziehungsweise Viskositätsentwicklung des Klebstoffs **K** als Funktion der Zeit dargestellt.
- Figur 2: zeigt eine schematischen die Herstellung eines Halbzeugs **H.**
- Figur 3: zeigt schematisch die Herstellung und den Aufbau eines Umformteils **U** und eines Sandwich-Verbundwerkstoffs **S.**

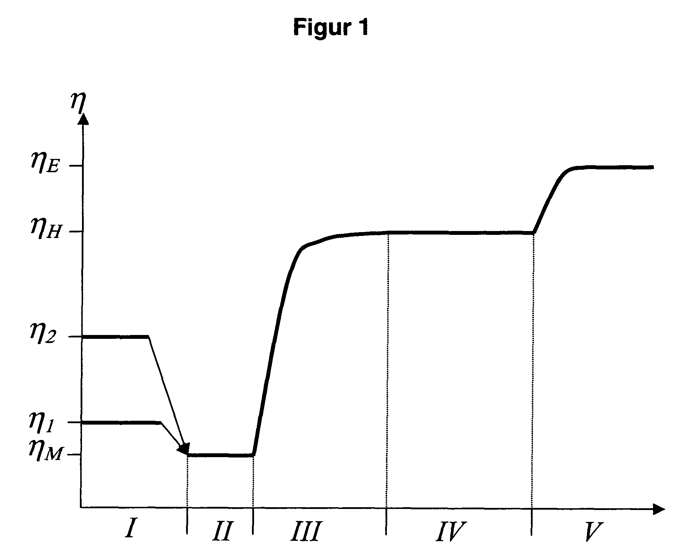

In Figur 1 ist die Zeit in 5 Abschnitte aufgeteilt. Die Länge dieser Abschnitte ist nicht massstäblich dargestellt.

Der erste Zeitabschnitt *I* bezeichnet die Situation vor der Mischung. Zumindest die Komponente **K1** wird erwärmt, wodurch deren Viskosität η_{*1*} abgesenkt wird. Die Komponente **K2** wird in diesem Beispiel nicht erwärmt und weist ein Viskosität *η*_{*2*} auf.

Der zweite Zeitabschnitt *II* bezeichnet die Situation während des Mischens. Die Mischung der Komponenten **K1** und **K2** weist unmittelbar nach dem Mischen eine Viskosität η_{*M*} auf

Der dritte Zeitabschnitt *III* bezeichnet die Phase der Vernetzung und der Lagerung des Halbzeugs **H.** Die Festigkeit beziehungsweise Viskosität steigt durch das Erkalten und Vernetzen von der Mischviskosität η_{*M*} nach auf eine konstante Viskosität beziehungsweise Festigkeit des Halbzeugs **H** *η*_{*H*} an.

Der vierte Zeitabschnitt *IV* bezeichnet den Umformprozess. Die Viskosität beziehungsweise Festigkeit bleibt während dem Umformprozess im wesentlichen konstant.

Der fünfte Zeitabschnitt *V* bezeichnet die Aushärtung und Bildung des Sandwich-Verbundwerkstoffs **S.** Die Viskosität, beziehungsweise die Festigkeit, steigt durch die zweite Vernetzungsstufe an und erreicht nach erkalten die Endfestigkeit des Sandwich-Verbundwerkstoffs **S** *η*_{*E*}.

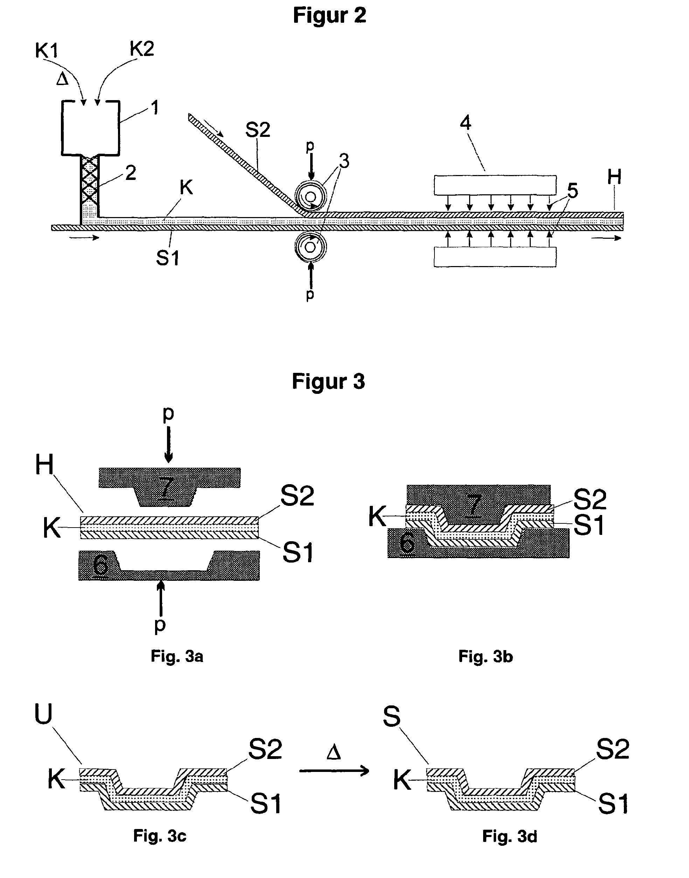

Figur 2 zeigt schematisch die Herstellung eines Halbzeugs **H.** Dies wird an einem schematischen Querschnitt durch eine beispielhafte industrielle Halbzeug-Herstellanlage gezeigt. Zumindest die Komponente **K1** wird aufgeheizt. Die zwei Komponenten **K1** und **K2** des zweikomponentigen Klebstoffs **K** werden einem Applikationsgerät 1 zugegeben, wo sie mittels Mischelementen 2 gemischt werden. Der gemischte Klebstoff **K** wird hierauf am Austrittsende auf ein sich bewegendes Substrat **S1** appliziert. Weiter stromabwärts wird der Klebstoff **K** mit einem zweiten Substrat **S2** kontaktiert und über sich drehende Rollen 3 auf die gewünschte Dicke gepresst. Weiter stomabwärts ist eine Kühlstation 4 dargestellt. Die Abkühlung wird im gezeigten Beispiel durch ein Anblasen von kühler Luft 5 durchgeführt. Nicht gezeigt ist die weiter stromabwärtsliegende Schlussfertigung wie Schneidstation und Stapelungseinheit für die Herstellung eines Stapels abgelängten Halbzeugs **H** oder Aufwickelstation für das Halbzeug **H** als Coils.

Figur 3 zeigt schematisch anhand von Querschnitten unterschiedliche Zeitpunkte in der Herstellung eines Umformteils **U** und eines Sandwich-Verbundwerkstoffs **S.**

Figur 3a stellt hierbei ein Halbzeug **H** dar, welches in eine Umformanlage eingelegt wird. Die Umformanlage weist eine Matrize 6 sowie einen Stempel 7 auf. Der Stempels 7 wird mittels einer Presse, insbesondere einer hydraulischen Presse, in Richtung Matrize bewegt, wodurch das Halbzeug **H** in die Ausnehmung der Matrize 6 Stempel gedrückt wird.

Figur 3b zeigt die Endphase des Pressvorganges. Aus dem Halbzeug **H,** welches sich den Konturen der Matrize 6 angepasst hat, ohne dass wellige, faltige oder runzelige Rundungen entstanden sind und ohne dass der Klebstoff zwischen den Substraten **S1** und **S2** herausgequetscht wurde, wurde ein Umformteil **U** erstellt.

Figur 3c zeigt das aus der Umformanlage ausgefahrene Umformteil **U**.

Figur 3d zeigt schliesslich den fertigen Sandwich-Verbundwerkstoff **S**, welcher aus dem Umformteil **U** nach Erhitzung durch eine Erhitzung erhalten wird. Durch die Aufheizung erfolgt die Aktivierung des Härters **D**, was zu einer weiteren Vernetzung und Erreichung der Endeigenschaften führt.

### Bezugszeichenliste

- **K**: Klebstoff
- **K1**: erste Kompoonente
- **K2**: zweite Komponente
- **S1**: erstes Substrat
- **S2**: zweites Substrat
- **H**: Halbzeug
- **U**: Umformteil
- **S**: Sandwich-Verbundwerkstoff
- **1**: Applikationsgerät

- 2: Mischelement
- 3: Rolle
- 4: Kühlstation
- 5: kühle Luft
- 6: Matrize
- 7: Stempel
- Δ: Erwärmung
- p: Druck

### Beispiele

Im folgenden sind einige Beispiele aufgezeigt, welche die Erfindung weiter veranschaulichen, den Umfang der Erfindung aber in keiner Weise beschränken sollen. Die in den Beispielen verwendeten Rohstoffe sind wie folgt:

**Tabelle 1**

| Verwendete Rohstoffe. | |
|---|---|
| **Verwendete Rohstoffe** | **Lieferant** |
| Dimerisierte C18-Fettsäure (Pripol™ 1013) | Uniquema |
| Adipinsäure | BASF |
| 2,2-Bis(4-hydroxyphenyl)propan | Fluka AG |
| Bis(4-hydroxyphenyl)sulfon | Fluka AG |
| Bisphenol-A-diglycidylether (=DGEBA) | Vantico |
| Polypropylenglycol-diglycidylether (ED-506) | Asahi-Denka Kogyo |
| Polypropylen-etherpolyol (M_{w}=2000 g/mol) | Bayer |
| Desmodur® CD | Bayer |
| 4,4'-Diphenyl-methylen-diisocyanat (=MDI) | Bayer |
| Triphenylphosphin | Fluka |
| CAB-O-SIL® TS-720 | Cabot |
| Dibutylzinndilaurat (DBTDL) | Fluka |
| Dicyandiamid (=Dicy) | SKW Troisdorf |
| Cardolite® NC-513 | Cardanol |
| Keramikhohlkugel E-Spheres SL-125 | Osthoff-Petrasch |

Allgemeine Herstellung für Herstellung des Epoxidaddukts **B** und seiner Mischung mit **A** (=**A**/**B**-Vormischung):

### A/B-Vormischung VM1

Bei 110°C wurden unter Vakuum und Rühren 123.9 g einer dimeren Fettsäure, 1.1 g Triphenylphosphin sowie 57.3 g Adipinsäure mit 658 g eines flüssigen DGEBA-Epoxidharzes mit einem Epoxidgehalt von 5.45 eq/kg 5 Stunden lang umgesetzt, bis eine konstante Epoxidkonzentration von 2.85 eq/kg erreicht war. Nach dem Ende der Reaktion wurden dem Reaktionsgemisch zusätzlich 226.3 g flüssigen DGEBA-Epoxidharzes zugegeben.

Es wurden im weiteren andere Mischungen VM2 bis VM4 hergestellt. Dabei wurde die Adipinsäure durch verschiedene aromatische Alkohole in der Art ersetzt, dass ein theoretisch gleicher Epoxidgehalt des Bindemittels von 2.80 - 2.95 eq/kg erreicht wurde:

### A/B-Vormischung VM2

Bei 110°C wurden unter Vakuum und Rühren 123.9 g einer dimeren Fettsäure, 1.1 g Triphenylphosphin sowie 95.0 g 2,2-Bis(4-hydroxyphenyl)-propan (= Bisphenol-A) mit 658 g eines flüssigen DGEBA-Epoxidharzes mit einem Epoxidgehalt von 5.45 eq/kg 5 Stunden lang umgesetzt, bis eine konstante Epoxidkonzentration von 2.95 eq/kg erreicht war. Nach dem Ende der Reaktion wurden dem Reaktionsgemisch zusätzlich 226.3 g flüssigen DGEBA-Epoxidharzes zugegeben.

### A/B-Vormischung VM3

Bei 110°C wurden unter Vakuum und Rühren 123.9 g einer dimeren Fettsäure sowie 28.3 g Adipinsäure, 1.1 g Triphenylphosphin und 47.3 g Bis(4-hydroxyphenyl)sulfon mit 658 g eines flüssigen DGEBA-Epoxidharzes mit einem Epoxidgehalt von 5.45 eq/kg 5 Stunden lang umgesetzt, bis eine konstante Epoxidkonzentration von 2.85 eq/kg erreicht war. Nach dem Ende der Reaktion wurden dem Reaktionsgemisch zusätzlich 226.3 g flüssigen DGEBA-Epoxidharzes zugegeben.

### A/B-Vormischung VM4

Bei 110°C wurden unter Vakuum und Rühren 123.9 g einer dimeren Fettsäure, 1.1 g Triphenylphosphin sowie 71.3 g Bis(4-hydroxyphenyl)sulfon mit 658 g eines flüssigen DGEBA-Epoxidharzes mit einem Epoxidgehalt von 5.45 eq/kg 5 Stunden lang umgesetzt, bis eine konstante Epoxidkonzentration von 2.82 eq/kg erreicht war. Nach dem Ende der Reaktion wurden dem Reaktionsgemisch zusätzlich 226.3 g flüssigen DGEBA-Epoxidharzes zugegeben.

### Verbindung C1

Es wurde ein Polyurethanprepolymer hergestellt aus MDI-Schuppen (4,4-Diphenyl-methylen-diisocyanat) und einem Polypropylenglykol mit einem Molekulargewicht von 2000 g/mol. Das Prepolymer wies einen NCO-Gehalt von 3.7 % auf.

### Herstellung der Klebstoffe K

### Klebstoff-Formulierungen

Es wurden diverse Klebstoffzusammensetzungen gemäss Tabelle 2 hergestellt. In Komponente **K1** wurde die **A/B**-Vormischung mit dem Prepolymer **C1**, Dibutylzinndilaurat, Dicy und Cabosil homogen in einem Planetenmischer bei einer Temperatur von 95 °C unter Vakuum gemischt. Danach werden Keramikhohlkugel zugefügt und bei einer nicht zu hoher Rührgeschwindigkeit gerührt, um ein Verplatzen der Hohlkugel zu vermeiden. Anschliessend wurde **K1** bei einer Temperatur zwischen 85 und 95 °C in eine Kartusche abgefüllt.

Die Komponente **K1** und **K2** wurden im Verhältnis gemäss Tabelle 2 bei einer Temperatur zwischen 85 und 95°C in einem Schramoid gut gemischt und in eine Kartusche abgefüllt und innerhalb von 10 Minuten nach Ende des Mischens appliziert. Bei ***Ref.-2*** wurde keine Komponente **K2** beigemischt.

### Applikation

### Herstellung eines Halbzeugs

Die Klebstoffe gemäss Tabelle 2 wurden auf ein 0.25 mm dickes beöltes Stahlblech appliziert, mit einem zweiten gleichen beöltes Stahlblech überdeckt und mit einer auf ca. 100°C temperierten Presse auf eine Klebstoffdicke von 1 mm gepresst. Nach der Abkühlung ist bei den Klebstoffen ***K-1*** bis ***K-5*** eine gute Haftung der Bleche vorhanden, so dass die Verbunde gut gehandhabt werden können.

**Tabelle 2.**

| Klebstoffformulierungen | | | | | | | |
|---|---|---|---|---|---|---|---|
| Bezeichnung | ***K-1*** | ***K-2*** | ***K-3*** | ***K-4*** | ***K-5*** | ***Ref.1*** | ***Ref.2*** |
| 1. Komponente **K1** | | | | | | | |
| **A/B -VM1** [g] | 42.4 | - | - | - | - | 42.4 | 42.4 |
| **A/B -VM2** [g] | - | 42.4 | - | - | - | - | - |
| **A/B -VM3** [g] | - | - | 42.4 | - | - | - | - |
| **A/B -VM4** [g] | - | - | - | 42.4 | 42.4 | - | - |
| **C1** [g] | 26.7 | 26.7 | 26.7 | 26.7 | 22.2 | - | 26.7 |
| ED-506 (**G**) [g] | 2.0 | 2.0 | 2.0 | 2.0 | 2.0 | 2.0 | 2.0 |
| CAB-O-SIL® [g] | 1.3 | 1.3 | 1.3 | 1.3 | 1.2 | 1.3 | 1.3 |
| Dicy (**D**) [g] | 2.2 | 2.2 | 2.2 | 2.2 | 2.2 | 2.2 | 2.2 |
| DBTL [g] | 0.02 | 0.02 | 0.02 | 0.02 | 0.02 | - | 0.02 |
| E-Spheres SL-125[g] | 24.9 | 24.9 | 24.9 | 24.9 | 23.1 | 24.9 | 24.9 |
| *Total* | *99.5* | *99.5* | *99.5* | *99.5* | *93.1* | *72.8* | *99.5* |

| 2. Komponente **K2** | | | | | | | |
|---|---|---|---|---|---|---|---|
| Desmodur CD[g] | 100 | 100 | 100 | 100 | 26.7 | 100 | 0 |
| **C1** [g] | | | | | 33.3 | | |
| CAB-O-SIL® [g] | | | | | 1.3 | | |
| Cardolite ® NC-513[g] | | | | | 8.0 | | |
| E-Spheres SL-125[g] | | | | | 30.7 | | |
| *Total* | *100* | *100* | *100* | *100* | *100* | *100* | *0* |
| **K2/K1** [w/w] | 0.54% | 0.54% | 0.54% | 0.54% | 14.3% | 0.54% | n.a. |

Weiterhin erfolgte bei erneuter Druckaufbeschlagung mittels Presse kein Ausquetschen des Klebstoffs. Bei den Vergleichsklebstoffen ***Ref.-1*** und ***Ref.-2*** hingegen wurde bei Druckaufbeschlagung Klebstoff herausgequetscht.

Das Beispiel ***K-5Al*** entspricht ***K-5,*** ausser dass anstelle von Stahlblech als Substrat Aluminiumblech der Dicke 0.25 mm verwendet wurde.

Als Referenzbeispiel ***Al*****/*****PP*** wurde 1 mm Polypropylen als Zwischenschicht zwischen zwei Aluminiumbleche der Dicke von 0.25 mm hergestellt.

### Herstellung eines Umformteils

Für die Prüfung des Umformvermögens der hergestellten Halbzeuge wurden Tiefzieheigenschaften mit dem Erichsen ― Näpfchenziehwerkzeug ermittelt. Aus dem Halbzeug wurde eine Scheibe mit einem Durchmesser von 64 mm gestanzt. Ein kleines Näpfchen, ein Hutprofil, von einem Durchmesser von 40 mm und einer Tiefe von 20 mm wurde tiefgezogen. Ein ringförmiger Niederhalter verhinderte eine Aufschälung der Klebverbindungen vom Rand des Blechs her.

Alle Klebstoffe ***K-1*** bis ***K-5*** konnten gut umgeformt werden und zeigten kein bis lediglich geringes Herausquetschen des Klebstoffs. Die Referenzklebstoffe ***Ref.-1*** und ***Ref.-2*** zeigte sich ein starkes Herausquetschen des Klebstoffs, so dass an gewissen Stellen im wesentlichen kein Klebstoff mehr zwischen den Blechen gefunden werden konnte.

Im Vergleich der Klebstoffe ***K-4*** und ***K-5*** konnte festgestellt werden, dass ***K-5*** beim Tiefziehen bessere Eigenschaften zeigte.

Alle Klebstoffe ***K-1*** bis ***K-5*** zeigten auch nach einer Lagerzeug des Halbzeugs nach 6 Monaten identisches Verhalten.

### Herstellung eines Sandwich-Verbundwerkstoffs

Alle Umformteile mit den Klebstoffen ***K-1*** bis ***K-5*** wurden bei 180 °C während 25 Minuten in einem Ofen ausgehärtet. Sie zeigten allesamt sehr gute Härtung, eine ausgezeichnete Haftung sowie gute Schlagzähigkeit.

Da die mechanischen Eigenschaften an flachen Substraten zu erfolgen hat, wurde konnte hierfür nicht von den Umformteilen ausgegangen werden, sondern es wurden die jeweiligen Halbzeuge **H** hierfür wie folgt verwendet:

Die hergestellten Halbzeuge wurden bei 180 °C während 25 Minuten in einem Ofen ausgehärtet. Nach dem Erkalten wurden die mechanischen Eigenschaften der Sandwich-Verbundwerkstoffe von ***K-5*** und ***K-5Al*** bestimmt.

Als Referenz gegenüber den Sandwich- Verbundwerkstoffen **S** wurde eine 1.5 mm dickes Aluminiumblech ***Al-1.5*** sowie das Polypropylenverstärkte Composite ***Al*****/*****PP*** herangezogen.

### Prüfmethoden

- T-Peel-Festigkeit (DIN 53282, ISO 11339) Dieses Prüfverfahren misst die Kraft vertikal zur Klebfläche. Die Dimension der T-Peel Festigkeit ist N/mm (= durchschnittliche Kraft [N] geteilt durch die Breite des Probekörpers [mm]).
- 3-Punkt-Biegefestigkeit (ISO 178) Die Biegefestigkeit ist die Festigkeit bei einer 3-Punkt-Biegebelastung mit der Spannweite von 20 cm, wobei ein 25 breiter Probekörper verwendet wird. Gemessen wird die Festigkeit [N] bei einer Biegung von 2 mm, 5 mm und 10 mm.

### Resultate

Aus den Ergebnissen der Tabelle 3 ist ersichtlich, dass die erfinderischen Sandwich-Verbundwerkstoffe eine gegenüber einem massiven Aluminiumblech **(*****Al-1.5*****)** oder einem Al-Polypropylen-Composite **(*****Al*****/*****PP*****)** eine massiv erhöhte Verstärkung - trotz eines stark reduzierten Gewichtes- aufweisen.

Weiterhin zeigte sich dass die Sandwich-Verbundwerkstoffe ein ausserordentlich gute Alterungsbeständigkeit und Haftung aufweisen, wie die Werte nach dem Kataplasmatests (70°C/100% relative Luftfeuchtigkeit) belegen.

**Tabelle 3**

| Mechanische Eigenschaften von Sandwich-Verbundwerkstoffen. | | | | |
|---|---|---|---|---|
| Bezeichnung | ***K-5*** | ***K-5Al*** | ***Al-1.5**(Ref.)* | ***Al*****/*****PP**(Ref.)* |
| T-Peel-Festigkeit (**H**) [N/mm] | 4.0 | | | |
| T-Peel-Festigkeit(**S**) [N/mm] | 4.4 | 2.37 | | |
| 3-Punkt-Biegesteifigkeit (**S**)[N] | | | | |
| 2 mm Biegung | 136 | 173 | 43 | 94 |
| 5 mm Biegung | 175 | 244 | 85 | 157 |
| 10 mm Biegung | 200 | 306 | 132 | 177 |
| nach 7 d Kataplasma | | | | |
| 2 mm Biegung | | 186 | | |
| 5 mm Biegung | | 263 | | |
| 10 mm Biegung | | 325 | | |

## Patentansprüche

1. Zweikomponentiger Klebstoff **K** bestehend aus einer Komponente **K1** und einer Komponente **K2, dadurch gekennzeichnet, dass** die Komponente **K1**
mindestens ein Epoxidharz **A** mit durchschnittlich mehr als einer Epoxidgruppe pro Molekül;
mindestens ein Epoxid-Addukt **B** mit je durchschnittlich mehr als einer Epoxidgruppe und mehr als einer Hydroxylgruppe pro Molekül;
mindestens ein Reaktionsprodukt **F** eines Epoxid-Adduktes **B** mit einer Verbindung **C** mit mindestens zwei Isocyanatgruppen sowie
mindestens einen Härter **D** für Epoxidharze, welcher durch erhöhte Temperatur aktiviert wird; umfasst und die Komponente **K2**
mindestens eine Verbindung **E** mit mindestens zwei Isocyanat-Gruppen umfasst; und wobei das Epoxid-Addukt **B**
ein Epoxid-Addukt **B1**, welches aus mindestens einer Dicarbonsäure und mindestens einem Diglycidylether erhältlich ist;
und gegebenenfalls kombiniert mit
einem Epoxid-Addukt **B2**, welches aus mindestens einem
Bis(aminophenyl)sulfon-Isomeren oder mindestens einem aromatischen Alkohol und mindestens einem Diglycidylether
erhältlich ist; ist.

2. Zweikomponentiger Klebstoff **K** gemäss Anspruch 1, **dadurch gekennzeichnet, dass** das Epoxidharz **A** ein Flüssigharz, insbesondere ein Bisphenol-A-diglycidylether, Bisphenol-F-diglycidylether oder Bisphenol-A/F-diglycidylether ist.

3. Zweikomponentiger Klebstoff **K** gemäss Anspruch 1 oder 2, **dadurch gekennzeichnet, dass** für die Herstellung des Epoxid-Addukt **B1** als Dicarbonsäure eine dimere Fettsäure, insbesondere mindestens einer dimeren C4 - C20 Fettsäure, und als Diglycidylether Bisphenol-A-diglycidylether, Bisphenol-F-diglycidylether oder Bisphenol-A/F-diglycidylether verwendet wird .

4. Zweikomponentiger Klebstoff **K** gemäss einem der einem der vorhergehenden Ansprüche, **dadurch gekennzeichnet, dass** für die Herstellung des Epoxid-Addukt **B2** ein aromatischer Alkohol, ausgewählt aus der Gruppe 2,2-Bis(4-hydroxyphenyl)propan, Bis(4-hydroxyphenyl)-methan, Bis(4-hydroxyphenyl)sulfon, Hydrochinon, Resorcin, Brenzkatechin, Naphthohydrochinon, Naphtoresorcin, Dihydroxynaphthalin, Dihydroxyanthrachinon, Dihydroxy-biphenyl, 3,3-bis(p-hydroxyphenyl)-phthalide, 5,5-Bis(4-hydroxyphenyl)hexahydro-4,7-methanoindan sowie alle Isomeren der vorgenannten Verbindungen oder und als Diglycidylether Bisphenol-A-diglycidylether, Bisphenol-F-diglycidylether oder Bisphenol-A/F-diglycidylether verwendet wird.

5. Zweikomponentiger Klebstoff **K** gemäss einem der vorhergehenden Ansprüche, **dadurch gekennzeichnet, dass** das Epoxid-Addukt **B ein** Molekulargewicht von 700 - 6000 g/mol, vorzugsweise 900 - 4000 g/mol, insbesondere 1000 - 3300 g/mol aufweist.

6. Zweikomponentiger Klebstoff **K** gemäss einem der vorhergehenden Ansprüche, **dadurch gekennzeichnet, dass** die Verbindung **C** ein Isocyanatgruppen aufweisendes Polyurethanprepolymer **C2** ist, welches aus mindestens einem Polyisocyanat **C1** und aus mindestens einem Polyol, insbesondere mindestens einem Polyoxyalkylenpolyol, bevorzugt mindestens einem Polyoxyalkylendiol, hergestellt wird.

7. Zweikomponentiger Klebstoff **K** gemäss einem der vorhergehenden Ansprüche, **dadurch gekennzeichnet, dass** das Reaktionsprodukt **F** die Struktur 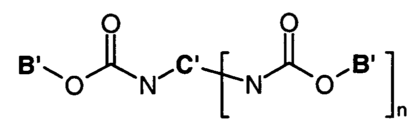 aufweist, wobei **B'** identisch mit der Struktur von **B** ist, ausser dass eine Hydroxylgruppen fehlt und wobei **C'** identisch mit der Struktur von **C** ist, ausser dass alle Isocyanatgruppen fehlen und wobei n+1 die Anzahl der Isocyanatgruppen von **C** darstellt.

8. Zweikomponentiger Klebstoff **K** gemäss einem der vorhergehenden Ansprüche, **dadurch gekennzeichnet, dass** der Härter **D,** ein latenter Härter aus der Gruppe Dicyandiamid, Guanamine, Guanidine und Aminoguanidine ist.

9. Zweikomponentiger Klebstoff **K** gemäss einem der vorhergehenden Ansprüche, **dadurch gekennzeichnet, dass** die Verbindung **E,** ein Polyisocyanat oder ein Isocyanatgruppen aufweisendes Polyurethanprepolymer ist, welches aus mindestens einem Polyisocyanat und aus mindestens einem Polyol, insbesondere mindestens Polyoxyalkylenpolyol, bevorzugt mindestens einem Polyoxyalkylendiol, hergestellt wird.

10. Zweikomponentiger Klebstoff **K** gemäss einem der vorhergehenden Ansprüche, **dadurch gekennzeichnet, dass** der Gesamtanteil von Epoxidharz **A** und Epoxid-Addukt **B** in der Summe 10 - 60 Gewichts-%, vorzugsweise 15 - 55 Gewichts-%, bezogen auf das Gewicht des gesamten Klebstoffs **K**, beträgt.

11. Zweikomponentiger Klebstoff **K** gemäss einem der vorhergehenden Ansprüche, **dadurch gekennzeichnet, dass** zusätzlich mindestens ein Füllstoff vorhanden ist, insbesondere in einem Anteil von 5 - 30 Gewichts-%, vorzugsweise 10 - 25 Gewichts-%, bezogen auf das Gewicht des gesamten Klebstoffs **K.**

12. Zweikomponentiger Klebstoff **K** gemäss einem der vorhergehenden Ansprüche, **dadurch gekennzeichnet, dass** zusätzlich mindestens ein Epoxid-Gruppen-tragender Reaktiwerdünner vorhanden ist.

13. Verfahren zur Herstellung eines Halbzeugs **H, dadurch gekennzeichnet, dass** zumindest die Komponente **K1** auf eine Temperatur zwischen 130° und 60°C, insbesondere zwischen 130°C und 80°C, bevorzugt zwischen 100°C und 90°C erhitzt wird, die Komponenten **K1** und **K2** miteinander gemischt werden und der gemischte Klebstoff **K** gemäss einem der Ansprüche 1 bis 12 auf ein flächiges Substrat **S1** appliziert werden und anschliessend der Klebstoff **K** mit einem flächigen Substrat **S2,** insbesondere unter Druckaufschlagung während oder nach der Kontaktierung mit dem Substrat S2 auf mindestens eines der Substrate **S1** oder **S2,** kontaktiert wird, so dass sich der gemischte Klebstoff **K** zwischen den Substraten **S1** und **S2** angeordnet ist.

14. Verfahren zur Herstellung eines Halbzeugs **H** gemäss Anspruch 13, **dadurch gekennzeichnet, dass** das flächige Substrat **S1** aus demselben Material wie das flächige Substrat **S2** besteht.

15. Verfahren zur Herstellung eines Halbzeugs **H** gemäss Anspruch 13 oder 14, **dadurch gekennzeichnet, dass** zumindest eines der Substrate **S1** oder **S2** ein Blech, insbesondere ein Stahl- oder Aluminium-Blech, bevorzugt ein beöltes Stahl- oder beöltes Aluminium-Blech, insbesondere bevorzugt ein beöltes Stahlblech ist.

16. Verfahren zur Herstellung eines Halbzeugs **H** gemäss Anspruch 15, **dadurch gekennzeichnet, dass** das Blech eine Dicke zwischen 0.5 mm und 0.1 mm, insbesondere zwischen 0.4 mm und 0.2 mm, aufweist.

17. Verfahren zur Herstellung eines Halbzeugs **H** gemäss einem der Ansprüche 13 bis 16, **dadurch gekennzeichnet, dass** die Komponenten **K1** und **K2** in einem solchen Verhältnis gemischt werden, dass das OH/NCO-Verhältnis ≥ 2, insbesondere 2 - 50, beträgt.

18. Verfahren zur Herstellung eines Halbzeugs **H** gemäss einem der Ansprüche 13 bis 17, **dadurch gekennzeichnet, dass** das Halbzeug **H** anschliessend entweder auf eine Rolle aufgewickelt wird und in Form eines Coils gelagert wird; oder abgelängt wird und das abgelängte Halbzeug **H** in Form eines Stapels gelagert wird.

19. Halbzeug **H, dadurch gekennzeichnet, dass** es durch ein Verfahren gemäss einem der Ansprüche 13 bis 18 hergestellt wird.

20. Verfahren zur Herstellung eines Sandwich-Verbundwerkstoffs **S**, **dadurch gekennzeichnet, dass** ein Halbzeug **H** gemäss Anspruch 19 einem Umformprozess unterworfen wird und auf eine Temperatur zwischen 130°C und 230°C, insbesondere zwischen 170°C und 190°C, aufgeheizt wird.

21. Sandwich-Verbundwerkstoff **S**, **dadurch gekennzeichnet, dass** er nach einem Verfahren nach Anspruch 20 hergestellt wird.

22. Verwendung eines Sandwich-Verbundwerkstoff **S** gemäss Anspruch 21, **dadurch gekennzeichnet, dass** er im Fahrzeugbau, insbesondere im Karosseriebau, eingesetzt wird.
